# EUROPEAN PATENT APPLICATION

(11) **EP 4 589 559 A1**
(43) Date of publication of application: **23.07.2025**
(21) Application number: 24153057.5
(22) Date of filing: 22.01.2024
(51) Int. Cl.: G07F 11/16, G07F 9/10, B65G 1/04

(54) **A STORAGE SYSTEM**

(71) Applicant: AUTOSTORE TECHNOLOGY AS, 5578 Nedre Vats (NO)
(72) Inventor: RAMÍREZ-PÉREZ, Juan Pablo, 5578 Nedre Vats (NO)
(74) Representative: Kilburn & Strode LLP

(57) **Abstract**

The disclosure relates to a storage and dispensing system and a method for operating a storage and dispensing system. The storage and dispensing system comprises a storage apparatus and a port located remote from the storage apparatus. The storage apparatus is configured to store a plurality of containers. The port is configured to receive a customer request for a plurality of items. The port is further configured to dispense, in response to the customer request, the plurality of items to thereby fulfil the customer request by providing access to respective interiors of containers retrieved from the plurality of containers.

## Description

### TECHNICAL FIELD

The disclosure relates to a storage system. More particularly, it relates to a storage and dispensing system and to a method for operating a storage and dispensing system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

An order may contain many different items, which may be stored in various different locations in a storage system. In some examples, such as those involving orders from supermarkets, the items may be stored at different temperatures and therefore stored in different subareas of the storage system. It is challenging to consolidate all these different items to provide the finished order in an efficient way. If delivery of the order to the customer is required on a short timescale, it can be challenging to combine all the different items from the different locations in the storage system to dynamically and responsively provide all of these together for collection at the same time. For some storage systems, items comprised in different orders may simply be released from the storage system in any order when they are available/retrievable, which does not provide consolidation of the items for each order. However, repacking of items such as into different containers in order to consolidate the orders may lead to slower delivery of orders and require additional energy consumption and additional equipment.

An automated storage and retrieval system can provide a highly modular and efficient system for storage and retrieval of goods. Within the grid, containers may be stacked on top of each other. A set of orders may indicate a plurality of goods to be retrieved from different containers stored in the grid in order to fulfil the orders. Typically there is considerable flexibility as to when particular goods from particular containers need to be retrieved. For example, to meet an order, it may merely be necessary to retrieve goods to meet a shipping deadline or vehicle departure deadline, which may not be for several hours or even days. In view of this, the automated storage and retrieval system may optimise when to retrieve different containers from the grid. For example, the automated storage and retrieval system may not retrieve a first container as soon as an order for a first item stored therein has been received, but instead may wait to retrieve the first container until an order has been received for a second item stored in a second container located in the same vertical stack of containers as the first container. This may reduce the total amount of time spent retrieving the first container and the second container.

However, while this grid optimisation provides efficient retrieval of goods on moderate timescales, it may not be possible to react efficiently to short-term inputs, such as new requests for goods or changes to requests for goods on a short timescale, within this optimised system. Moreover, if several requests for goods are received close together in time, the robots retrieving the containers may not be able to fulfil all of these requests until a considerable time after they have been received.

As such, a problem with known storage and retrieval systems is that they are less flexible than desired. In addition, such known storage and retrieval systems are less responsive to short-term requests or short-term, dynamic changes in requests than desired. Moreover, such known storage and retrieval systems are less able to efficiently consolidate orders with large numbers of items than desired and less able to handle peaks in demand for goods than desired.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an embodiment of a a storage and dispensing system as described herein;
Fig. 6 shows an embodiment of a delivery robot as described herein.
Fig. 7 shows an embodiment of a port as described herein.
Fig. 8 shows an embodiment of a method for operating a storage and dispensing system as described herein.

### DETAILED DESCRIPTION

In overview the disclosure relates to a storage and dispensing system and a method for operating a storage and dispensing system. The storage and dispensing system includes a storage apparatus configured to store a plurality of containers. The storage apparatus may be a storage grid configured to store the containers in stacks. The storage and dispensing system also includes a port. The port is configured to provide access to containers retrieved from the plurality of containers, and may be described as an access station. The port is located remote from the storage apparatus. In other words, the port is spatially separated from the storage grid. In other words, the port may be described as not directly coupled to the storage grid. In some examples, the port may be disposed in a car park, drive through or curb side location.

The port is configured to receive a customer request for a plurality of items. This may include the customer scanning a QR code at a sensor of the port, or entering a code at an input device of the port. The customer may have placed an order for the plurality of items previously. The QR code or code may correspond to and be associated with the order. The customer request may be for (immediate or short-term) dispensing of the plurality of items comprised in the order, i.e. comprised in the customer request. In other words, the customer request may be a request to pick up the plurality of items, which may have been ordered previously.

The port is configured to dispense, in response to the customer request, the plurality of items to thereby fulfil the customer request by providing access to respective interiors of containers retrieved from the plurality of containers. In other words, the port may provide access to the interiors of some of the plurality of containers having been stored in the storage apparatus. The port may be configured to provide access, i.e. customer access, to these to enable retrieval of the plurality of items from the containers. For example, the port may comprise one or more conveyors configured to (sequentially) locate the containers under an opening configured to enable retrieval of the items therethrough. The opening may comprise a shutter configured to open to expose the opening in response to the customer request and/or in response to the presence of the containers on the one or more conveyors. In other words, the port may enable dispensing of finished, picked orders to a customer.

These features interact to provide increased flexibility, increased responsiveness and increased ability to consolidate a plurality of items of an order and to handle peaks in demand efficiently. The plurality of items can be dispensed directly to the customer through providing access to the appropriate series of containers in response to the customer request, providing consolidation of the order at the location of the port through direct customer access. Since access is provided to the interiors of the same containers that are stored in the storage apparatus, repacking of the plurality of items into different containers, for example in order to consolidate the order, is not necessary. This provides faster dispensing of the order and reduces the need for additional equipment, processes and manual intervention to be employed for each order.

The separation of the storage apparatus and the port also provides an opportunity to make changes to the items held in the containers and/or to the order in which the containers are presented at the port, thereby increasing the flexibility and responsiveness of the system. The decoupling of the port from the storage system decouples the provision of the items from optimisations employed in the storage system. For systems using a storage grid, the decoupling of the port from the storage grid decouples the provision of goods from the grid optimization. For example, containers may be stored in a buffer area between being retrieved from the storage grid and being provided to the port. This buffer area can provide an off-grid zone which it is possible to retrieve containers from more quickly and in which it is easier to access containers so as to alter the goods contained therein. The containers may be transported to the port, from the storage grid/from the buffer area, by one or more delivery robots such as one or more autonomous mobile robots (AMRs).

The present disclosure enables the storage and dispensing system to more efficiently serve short-term requests for goods, such as those generated when a customer or gig worker arrives at a storage location to collect a 'Click and Collect' order. Through separating the storage grid and the port, and optionally providing a buffer area, faster access to the requested goods is provided relative to the situation in which all goods are held in the storage grid or an otherwise consolidated storage apparatus until the request is received. In other words, the transit between the storage apparatus and the port itself provides increased flexibility to the storage and dispensing system through partially separating the storage and dispensing functions. Moreover, these features also enable a faster response to a high volume of requests received in a short amount of time. It may not be possible to retrieve a large number of containers from the storage grid or otherwise consolidated storage apparatus in a short time period, or at least not without a large number of robots operating thereon. As such, providing a transit region and/or buffer area between the storage apparatus and the port may enable more efficient handling of peaks in demand for goods.

The storage apparatus may include a first storage apparatus storing chilled containers and a second storage apparatus storing ambient temperature containers. Access may be provided to at least one of these chilled containers and at least one of these ambient temperature containers at the port. As such, the present disclosure enables improved consolidation of diverse orders comprising different temperature items. The separation of the port from the storage apparatuses can provide the opportunity in the process workflow to combine these items stored in different storage apparatuses for combined and consolidated presentation at the port.

### Automated storage and retrieval system overview

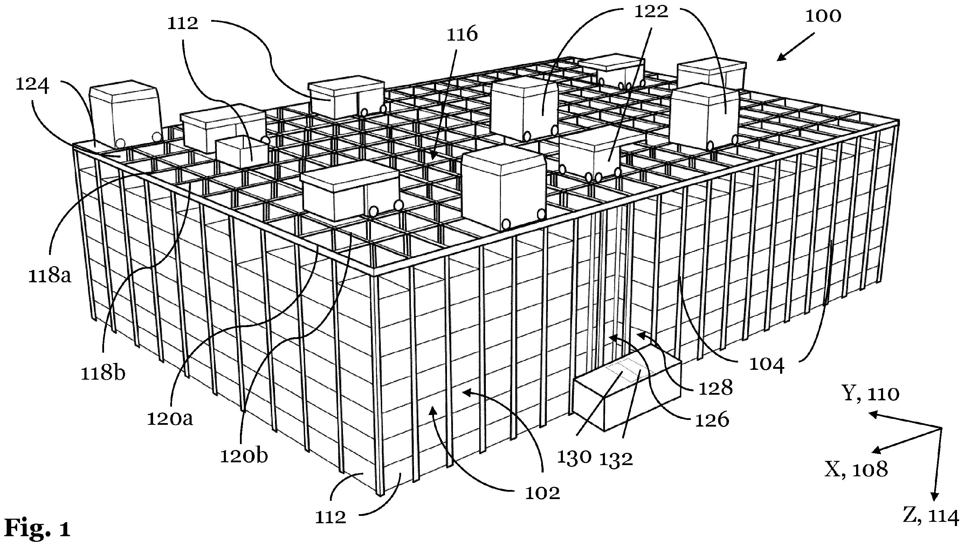

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

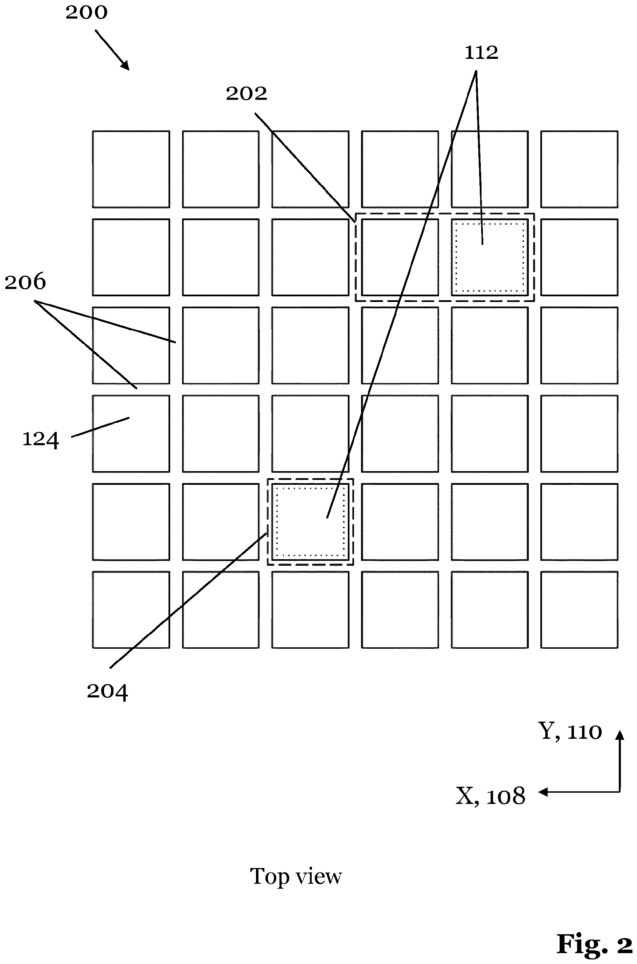

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

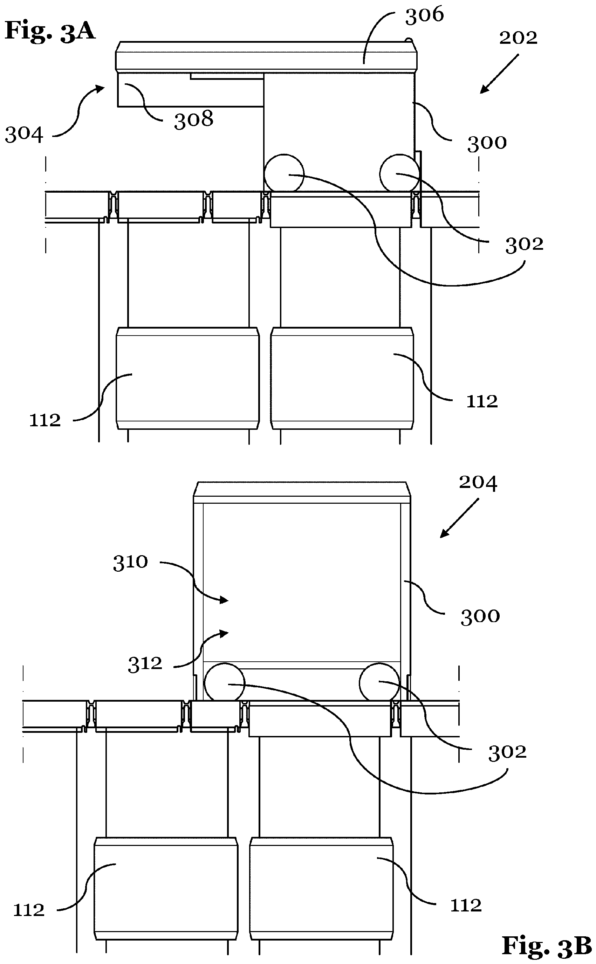

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

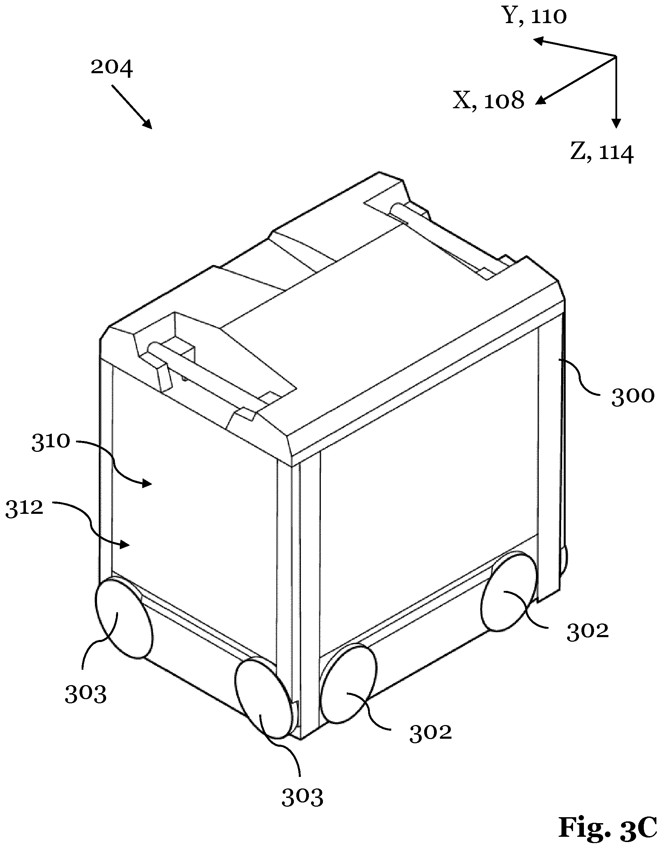

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

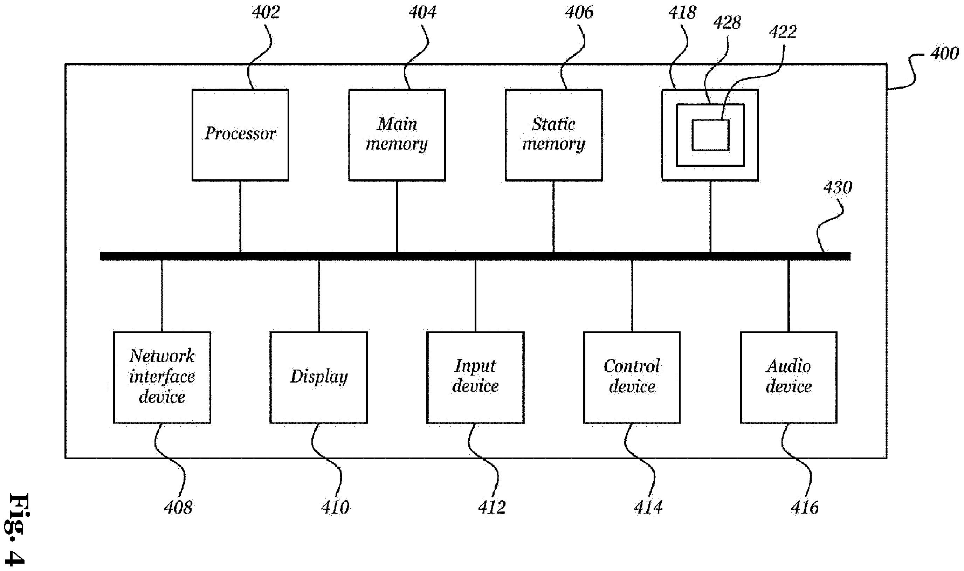

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

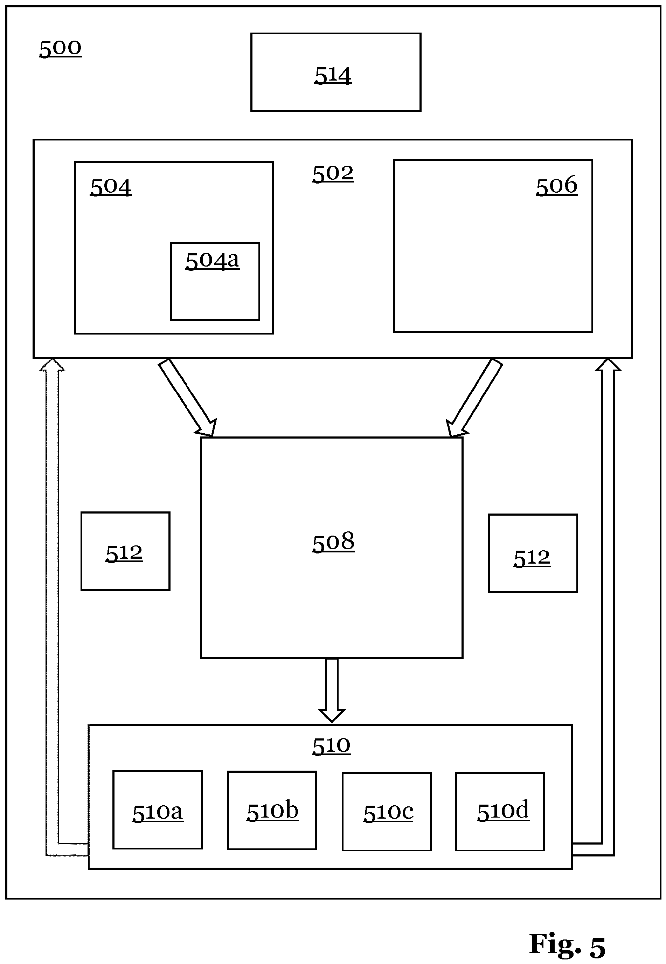

Referring to the embodiment shown in Fig. 5, a storage and dispensing system 500 is depicted.

The storage and dispensing system 500 comprises a storage apparatus 502 configured to store a plurality of containers. The storage apparatus 502 may correspond to the automated storage and retrieval system described in relation to Fig. 1, i.e. to the (storage) grid 100. In some examples, the storage apparatus 502 may comprise or correspond to one or more shelving units or movable carts with the plurality of containers disposed, arranged or fixed thereon. The containers may correspond to the containers 112 described in relation to Fig. 1. The containers maybe stacked, i.e. stacked on top of each other. The storage apparatus 502 may be configured to store the plurality of containers 112 arranged in stacks, i.e. the containers 112 maybe arranged in stacks in the grid 100.

The storage apparatus 502 may comprise a first storage apparatus 504 and a second storage apparatus 506. The first storage apparatus 504 may be configured to store containers at a first temperature and the second storage apparatus 506 may be configured to store containers at a second, different temperature. The first storage apparatus 504 may be configured to store chilled containers. The second storage apparatus 506 may be configured to store ambient temperature containers. For example, if supermarket/food items are stored in the storage grid 502, the chilled containers may contain fresh products that should be stored at a low temperature such as meat, fish, dairy and pre-prepared meals, and the ambient temperature containers may contain products that can be stored at ambient temperatures/typical room temperatures such as canned food, tinned food, bread and toiletries.

The first storage apparatus 504 may comprise one or more cooling units or air conditioning units configured to cool the first storage apparatus 504 and keep it below a pre-defined temperature, e.g. below 5°C. The first storage apparatus 504 may be sealed or enclosed within one or more insulating panels in order to keep the interior of the first storage apparatus 504 cool. The first storage apparatus 504 may comprise a third storage apparatus 504a, which may be configured to store containers at a third temperature different to the first and second temperatures, for example maybe configured to store frozen items in containers. For example, the containers in the third storage apparatus 504a may store frozen vegetables, frozen pre-prepared meals, ice and ice creams. The third storage apparatus 504a may comprise further cooling units and may be surrounded by further insulation configured to keep the third storage apparatus 504a below a pre-defined temperature, e.g. below 0°C. Locating the third storage apparatus 504a in the first storage apparatus 504 may lower the total power required to keep the containers chilled/frozen. In some examples, the third storage apparatus 504a may be located outside the first storage apparatus 504. The second storage apparatus 506 may not comprise cooling units/air conditioning units/insulation, or at least may comprise a smaller number of these.

The temperature of the second storage apparatus 506 may be higher than the temperature of the first storage apparatus 504 and the third storage apparatus 504a. The temperature of the third storage apparatus 504a may be lower than the temperature of the first storage apparatus 504.

In some examples, the first storage apparatus 504 may be separated from the second storage apparatus 506. In other examples, the first storage apparatus 504 maybe adjacent to, coupled to or integrated with the second storage apparatus 506. The first storage apparatus 504 may be a first storage grid configured to store chilled items in containers arranged in stacks as described in relation to Fig. 1. The second storage apparatus 506 may be a second storage grid configured to store ambient temperature items in containers arranged in stacks as described in relation to Fig. 1. The third storage apparatus 504a may be a third storage grid configured to store frozen items in containers arranged in stacks as described in relation to Fig. 1.

In Fig. 5, movement of containers between different parts of the storage and retrieval system 500 may be depicted using block arrows.

The storage and retrieval system 500 may comprise a buffer area 508. The buffer area may be configured to store containers retrieved from the storage apparatus 502, for example in one or more racks or transfer cells. The buffer area 508 may be configured to store containers retrieved from the first storage apparatus 504 (optionally including containers retrieved from the third storage apparatus 504a) and may be configured to store containers retrieved from the second storage apparatus 506. In other words, the buffer area 508 may be a multi-temperature storage area. The buffer area 508 maybe configured to store containers on a relatively short timescale, i.e. on a shorter timescale than they are stored in the storage apparatus 502. In the buffer area 508, the containers may not be densely stacked as they are in the storage apparatus 502 (as described in relation to Fig. 1), but instead may be distributed more sparsely so as to be more directly and individually and quickly accessible.

The chilled/frozen containers may comprise passive cooling means such as an inlay of insulated material, a lid with a passive cooling pack, etc. This may enable these containers to be kept in the buffer area 508 without active cooling for approximately 8-12 hours without requiring active cooling to be provided in the buffer area 508.

The storage and dispensing system 500 comprises at least one port 510. As depicted in Fig. 5, the at least one port 510 may comprise a plurality of ports, depicted as ports 510a, 510b, 510c and 510d. The storage and dispensing system 500 may comprise more or fewer ports 510 as needed. In the description below a single port 510 will usually be referred to for ease of explanation. It will be appreciated that the description provided is applicable to any number of ports 510.

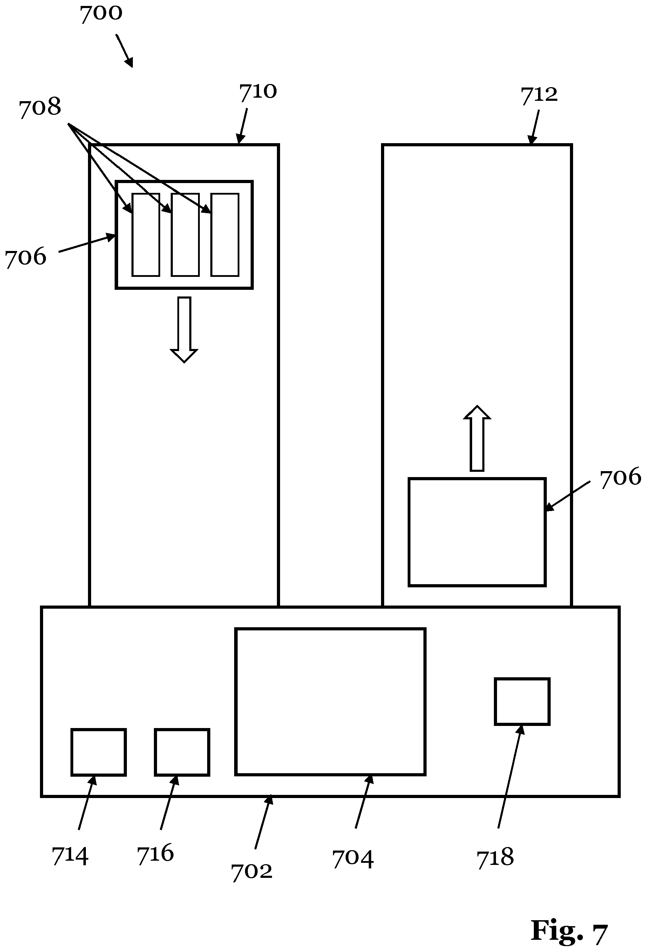

The port 510 is configured to receive a customer request for a plurality of items. As described in more detail in relation to Fig. 7, this may comprise, for example, scanning of a quick response (QR) code or entering of a code. The customer request may be submitted by a customer or by a gig worker or delivery driver acting on their behalf. The customer request may correspond to a customer order previously made by the customer, i.e. may comprise the same plurality of items. The customer request may be a request made or input at the port itself and may be for dispensing of the plurality of items at the port 510. In other words, the customer request may be for immediate or dynamic dispensing of the plurality of items, for example on a timescale of a minute or several minutes.

While the ports 130, 132 described in relation to Fig. 1 maybe for removing the containers from the grid 100, i.e. for picking items from the grid 100 by operators or workers, the port 510 may be for dispensing finished and/or completed and/or pre-picked orders to a customer or a gig worker or delivery driver that has submitted the customer request at the port. As such, the ports 130, 132 may be part of the grid 100, i.e. part of the storage apparatus 502, whereas the port 510 maybe for dispensing the plurality of items out of the storage and dispensing system 500 to fulfil (i.e. satisfy or complete) the customer request.

The port 510 is configured to provide access to respective interiors of containers retrieved from the plurality of containers. In other words, the port is configured to provide customer access to respective interiors of the containers retrieved from the plurality of containers, or access to a gig worker or delivery driver that has submitted the customer request at the port. In other words, the port 510 may be configured to enable retrieval of the plurality of items from the containers. The plurality of items may be disposed loose in the containers or may be held in bags or other packaging means within the containers. The port is configured to dispense, in response to the customer request, the plurality of items to thereby fulfil the customer request by providing the access to the respective interiors of containers retrieved from the plurality of containers. This can provide final dispensing/delivery of the completed order to the customer, i.e. dispensing of the plurality of items out of the storage and dispensing system 500.

The containers may be from any one, multiple or all of the first storage apparatus 504, the second storage apparatus 506 and the third storage apparatus 504a. As described in more detail below, the port 510 may comprise an opening configured to enable retrieval of the plurality of items therefrom, a first conveyor configured to transport the containers to the opening, and a second conveyor configured to transport emptied containers (i.e. which the items have been retrieved from) away from the opening.

The emptied containers may be transported from the port 510 back to the storage apparatus 502, for example to one, more or all of the first storage apparatus 504, the second storage apparatus 506 and the third storage apparatus 504a. These emptied containers may then be refilled with other goods and restored in the appropriate part of the storage apparatus 502.

The port 510 is located remote from the storage apparatus 502. In other words, each of the ports 510a, 510b, 510c, 510d may be located remote from each of the storage apparatuses 504, 504a, 506. The storage and dispensing system 500 may be described as comprising a separation distance between the storage apparatus 502 and the port 510. In other words, the port 510 may be detached from the storage apparatus 502. The port 510 maybe described as not being attached, not being coupled or not being directly coupled to the storage apparatus 502. The port 510 may be described as not being connected to the storage apparatus 502 or not connected to the storage apparatus 502 by any permanent feature. There may be free space between the port 510 and the storage apparatus 502. The port 510 maybe described as a satellite port or a satellite dispensing port. The port 510 may be located within the same facility as the storage apparatus 502 such that transit time between the storage grid 502 and the port 510 is not excessive, i.e. is approximately a minute or several minutes. For example, the port 510 may be provided metres, tens of metres, hundreds of metres or kilometres from the storage apparatus 502. The port 510 may be provided in a location at which a customer, gig worker or delivery driver can have safe access to it, for example in a shop/store, at a curb side, in a parking lot/car park, in a drive-through, etc.

Provision of this separation or transit region between the storage apparatus 502 and the port 510 spatially decouples these components, which decouples providing access to containers with the optimization of the storage apparatus, e.g. the storage grid. At some time after an order for items is retrieved, the containers containing these items may be retrieved from the storage apparatus 502 such that they are in transit between the storage apparatus 502 and the port 510. They may, for example, be stored temporarily in the buffer area 508, though they may move directly between the storage apparatus 502 and the port 510. When a customer request is received for the items at the port 510, the containers may be presented at the port 510 to the customer. In this manner, the customer requesting the goods does not have to wait some uncertain time based on grid optimization for the goods to be retrieved from the storage apparatus 502. As such, the present disclosure provides an improved trade-off between modularity and efficiency of storage of items and speed and responsiveness of dispensing of items.

As referred to above, Fig. 5 depicts the transport of containers between different parts of the automated storage and retrieval system 500 using block arrows. The containers may be transported from the storage apparatus 502 to the port 500. This may comprise transporting the containers from the storage apparatus 502 to the buffer area 508, and transporting the containers from the buffer area 508 to the port 510. The (emptied) containers may be transported from the port 510 back to the storage apparatus 502. It will be appreciated that this transport may be from/to any of the storage apparatuses 504, 504a, 506 and any of the ports 510a, 510b, 510c, 510d described herein.

The storage and dispensing system 500 may comprise one or more delivery robots 512 (generally depicted using the reference numeral 512 in Fig. 5). These delivery robots 512 may be configured to perform any one, multiple or all of the transporting steps referred to above. For example, the delivery robots 512 may be configured to transport the containers to the port 510, which may comprise transporting the containers from the storage apparatus 502 to the port 510, and may comprise transporting the containers from the storage apparatus 502 to the buffer area 508 and then from the buffer area 508 to the port 510. The delivery robot 512 may transport the (emptied) containers from the port 510 to the storage apparatus 502. The same delivery robot 512 or delivery robots 512 may be configured to perform each of these transporting steps. Alternatively, different delivery robots 512 or different groups of delivery robots 512 may be configured to perform different ones of these transporting steps. In some examples, one or more of the transporting steps may be performed by an operator, such as a human operator, or by a vehicle, such as an autonomous or human-controlled or human-driven vehicle.

While the robots 122, 202, 204 described in relation to Figs. 1-3C maybe configured to move on the rail system 116, the delivery robots 512 may be configured to move on any suitable surface, which may include internal flooring or the external/outside ground or tarmac, and may include rails or guidelines. In other words, the delivery robots 512 may be configured to move external to the grid 100. In some examples, the delivery robots 512 may be configured to transport the containers from the (retrieval) ports 130, 132 to the (dispensing) ports 510.

The storage and dispensing system 500 may comprise a system controller 514. The system controller 514 may correspond to or comprise corresponding features to the processor system 400 described in relation to Fig. 4, and/or may be communicatively coupled to the processor system 400 described in relation to Fig. 4. The system controller 514 may be communicatively coupled to the robots 512 and/or to the ports 510 (e.g. to port controllers thereof).

The system controller 514 may be configured to receive the customer request or a part thereof from the port 510, e.g. from the port controller. The system controller 514 may be configured to determine the containers in which the plurality of items comprised in the customer request are stored, for example by accessing a database stored in a memory thereof or through communication with the processing system 400. The system controller may be configured to generate and send computer-executable instructions to one or more of the delivery robots 512 to instruct them to collect the containers and transport them to the port 510 at which the customer request was received. In this manner, the system controller 512 may enable dynamic dispensing of the plurality of items in response to the received customer request. When the delivery robots 512 retrieve a container from the storage apparatus 512, are transporting a container, dispose a container in the buffer area 508, and/or position a container within a port 510 (e.g. on a conveyor thereof), the relevant delivery robot 512 may transmit a signal or message indicative of this to the system controller 514 for it to store in the database. In this manner, locations of the different containers may be maintained in an accurate and time-varying manner.

As described above, the separation between the storage apparatus 502 and the port 510 enables dynamic changes to the items included within the plurality of items of a customer request and/or the order in which different customer requests are fulfilled, i.e. dispensed at the ports 510. This may be coordinated by the system controller 514. For example, if a customer requests to change their customer request through adding or removing an item, the system controller 514 may receive this request, for example through electronic access to an online order tracking system or database. The system controller may, in response to this, generate a computer-executable instruction for fulfilling this changed customer request, and may transmit this computer-executable instruction, such as to one or more of the delivery robots 512.

For example, the computer-executable instruction may configured to cause a delivery robot 512 to transport an additional container to the port 510 or to not transport one of the containers to the port 510. Alternatively, or in addition, the computer-executable instruction may be configured to cause a delivery robot 512 to extract or add one or more items to one of the containers. Alternatively, or in addition, the computer-executable instruction may be configured to cause a delivery robot to change the order in which it transports containers within the same or multiple orders. As such, these features enable dynamic updating of orders in a fast, responsive and efficient manner.

### Delivery robots

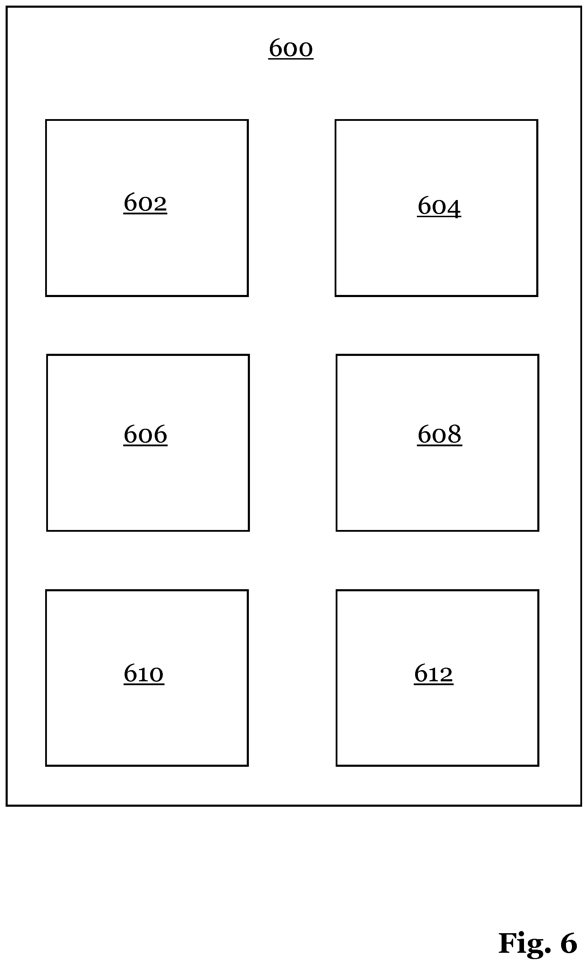

Referring to the embodiment shown in Fig. 6, a delivery robot 600 is depicted. The delivery robot 600 may correspond to one or more of the delivery robots 512 referred to in relation to Fig. 5. One of the delivery robots 512 will be referred to below for ease of explanation, but corresponding comments apply to multiple or all of the delivery robots 512. The delivery robot 512 may be a mobile robot such as an autonomous delivery robot (AMR) or an automated guided vehicle (AGV). An AMR may be configured to sense and move though its surroundings autonomously without being directly overseen or controlled by an operator. An automated guided vehicle may be configured to move through its surroundings in a pre-defined manner based on paths or signals arranged in the surroundings, for example based on lines marked on the floor or based on reflection of laser light from reflective elements in the surroundings.

The delivery robot 600 may comprise one or more movement mechanisms 602 for moving the delivery robot 600 between different locations, such as one or more motors coupled to and configured to drive one or more wheels. The movement mechanisms 602 may also comprise one or more arms/actuators/gripping mechanisms configured to pick up a container as described herein and to place a container as described herein on another component such as on a conveyor of a port. The movement mechanisms 602 may also be configured to grip one or more items and to add or remove them from the containers.

The delivery robot 600 may comprise one or more sensors 604 configured to receive inputs from the surroundings of the delivery robot 600, for example visual cameras, infra-red cameras, radio wave receivers, etc. The one or more sensors 604 may be configured to sense the surroundings of the delivery robot 600 to enable it to navigate those surroundings using the one or more movement mechanisms 602. The one or more sensors 604 may be configured to identify containers or items stored therein in order to enable it to determine which containers/items to transport, add or remove. As described above, each container may have a unique identifier, which may be marked on the container using a computer-readable identifier (e.g., a barcode, quick-response code or radio-frequency identification tag) to ease identification of the container by the delivery robot 600 using the one or more sensors 604.

The delivery robot 600 may comprise a cavity or platform 606 configured to support one or more containers as described herein. For example, the cavity 606 may be dimensioned to accommodate the container therein. The platform 606 may comprise one or more fixation mechanisms for keeping a container securely in place.

The delivery robot 600 may comprise communication means 608 configured to receive input signals and transmit output signals. These may be sent/received to/from one or more other delivery robots 600. These may be sent to/from a port 510 (such as to/from a port controller as described herein). These maybe sent to/from the system controller 514.

The delivery robot 600 may comprise a power supply 610 coupled to and configured to power any, multiple or all of the components of the delivery robot 600.

The delivery robot 600 may comprise a controller 612 coupled to and configured to control any, multiple or all of the components of the delivery robot 600. For example, the controller 612 may comprise a processor configured to determine a route of the delivery robot 600 or to determine a container to transport based on sensed/received inputs. The controller 612 may comprise a memory configured to store instructions such as locations to travel to/from and/or a container to transport. The memory may store sensed inputs. The controller 612 may correspond to or comprise corresponding features to the processing system 400 described in relation to Fig. 4. The controller 612 may be communicatively coupled to the processing system 400 described in relation to Fig. 4.

Any one, multiple or all of the above-described components of the delivery robot 600 may be communicatively coupled to and configured to communicate with each other. It will be appreciated that the explanation provided above is given by way of non-limiting example and that the delivery robot 600 can be provided in various different forms, as would be understood by the skilled person.

### Ports

Referring to the embodiment shown in Fig. 7, a port 700 is depicted. The port 700 may correspond to one or more of the ports 510 referred to in relation to Fig. 5. The port 700 may be described herein as a dispensing port, an item dispensing port, an access station, a customer access station or a customer access port. The port may be described as a conveyor port, carousel port or relay port. The port 700 may be for dispensing finished/pre-picked orders, i.e. may be for dispensing the plurality of items included in a customer request/customer order to the customer or to a gig worker/delivery driver acting on their behalf. In other words, the port 700 may be for dispensing the plurality of items in order to fulfil/complete the customer order or customer request, i.e. in order to deliver the plurality of items to the customer or to the gig worker/delivery driver acting on their behalf. In the below, a customer will be referred to for ease of explanation, though this is used to include a gig worker/delivery driver acting on behalf of the customer.

The port 700 may comprise a body 702. The body may be described as a frame or structure or housing. The body 702 may comprise a three-dimensional structure comprising one or more solid panels separating an interior of the port 700 from an exterior of the port 700. The body 702 may prevent unauthorised access to the interior of the port 700, i.e. to items in containers within this interior. In particular, this may prevent access to these without a valid customer request corresponding to these items. A wall or barrier may be provided coupled to and adjacent to the body 702 (to the left and right sides of the body 702 as depicted in Fig. 7) to prevent access to the back of the port 700 (above the body 702 as depicted in Fig. 7)

The port 700 may comprise an opening 704. The opening may be configured to enable customer retrieval of items 708 therethrough held in the interiors of containers 706. The opening 704 may comprise a shutter or safety panel, which may be configured to cover or close the opening 704 and to slide or otherwise move away from the opening 704 to uncover the opening 704 and thereby enable the retrieval of the items 708 from the container 706. This uncovering of the opening 704 may be performed in response to a valid customer request corresponding to these items 708. This uncovering of the opening 704 may only be performed when there are no containers 706 or conveyers moving underneath the opening. This may be determined by the port controller 718 based on the output of one or more additional sensors configured to monitor the conveyors and communicatively coupled to the port controller 718, and/or based on the control signals that have previously been transmitted by the port controller 718 to the conveyors and the times at which these have been transmitted. The opening including the shutter or safety panel may therefore contribute to preventing unauthorised access to the items 708 and may increase the safety of the customer through preventing them coming into contact with moving machinery.

The port 700 may comprise a first conveyor 710, which may be configured to transport the containers 706 to the opening 704. The port 700 may comprise a second conveyor 712, which may be configured to transport the containers 706 away from the opening 704, i.e. once the items 708 have been removed from the containers 706. The first conveyor 710 (and optionally the second conveyor 712) may be large enough to accommodate a number of containers 706 corresponding to multiple (e.g. 5-7) finished picked orders. The first conveyor 710 (and optionally the second conveyor 712) may be large enough to accommodate at least five, at least ten, at least twenty, at least thirty, at least forty, at least fifty containers, or at least one hundred containers. The first conveyor 710 (and optionally the second conveyor 712) may for example have a length of metres or tens of metres.

In some examples, the port 700 may comprise a single (curved) conveyor configured to transport the containers 706 both to and away from the opening 704. The conveyor(s) may comprise one or more belts wrapped around one or more drums or wheels coupled to a drive mechanism. The drive mechanism may be configured to rotate the drums or wheels to cause move one or more belts around them so as to move the containers 706 disposed on the one or more belts. The drive mechanism may comprise a motor, such as an electric motor.

The port 700 may comprise additional conveyors and/or one or more carousel mechanisms. These may be configured to increase the throughput of containers 706 through the port 700. These may also provide flexibility in enabling containers 706 corresponding to multiple orders to be held at the port 700 in parallel, for example if an order is temporarily missing one or more containers 706 storing items making up the order. The carousel mechanism may be located between the first conveyor 710 and the second conveyor 712, for example in the interior of the port 700 within the body 702. The carousel mechanism may comprise a plurality of platforms each configured to support a container 706 thereon. The platforms may be connected by a chassis or frame which is configured to rotate about a pivot, for example via a drive mechanism comprising a motor. Rotation of the chassis may rotate the platforms and the containers 706 thereon.

For example, the carousel mechanism may comprise three platforms. A first of the platforms may be adjacent to a bottom end (towards the bottom of Fig. 7) of the first conveyor 710. A second of the platforms may be adjacent to a bottom end (towards the bottom of Fig. 7) of the second conveyor 712. A third of the platforms may overlap (be disposed under) the opening 704. Rotation of the carousel mechanism may therefore rotate the platforms and the containers 706 thereon between these three positions. This enables sequential conveyance of containers 706 from the first conveyor 710 to the opening 704 to the second conveyor 712.

The port 700 may comprise a sensor 714. The sensor 714 may be configured to detect an input corresponding to the customer request. The sensor 714 may, for example, comprise an optical scanner or camera. The input may, for example, comprise a barcode or QR code. In some examples, the sensor 714 may comprise or be coupled to an input device such as a keyboard or touchscreen and the input may be a code, such as an alphabetic, numeric or alphanumeric code. The code may be or comprise a password. The port 700 may comprise a display screen configured to display a status of a customer request, for example an estimated time until dispensing.

The port 700 may comprise a port controller 718 (as described above). The port controller 718 may be coupled to and configured to control any, multiple or all of the components of the port 700. The controller 718 may correspond to or comprise corresponding features to the processing system 400 described in relation to Fig. 4. The controller 718 may be communicatively coupled to the processing system 400 described in relation to Fig. 4.

For example, the port controller 718 may comprise a processor configured to receive the input from the sensor and to verify that the customer request is valid and store it in a memory of the port controller 718. The port controller 718 may be configured, in response to receipt of the input or in response to verification that the input corresponds to a valid customer request, to transmit a signal to the system controller 514 and/or to one or more of the delivery robots 512 to effect transporting of particular containers 706 to the port 700, i.e. to the first conveyor 710. These particular containers 706 may be containers that hold the plurality of items 708 making up the customer request. The controller 718 may be configured to transmit one or more control signals to move the first conveyor 710, the second conveyor 712 and/or the shutter or safety panel of the opening 704.

It will be appreciated that, since the port controller 718 and the system controller 514 are communicatively coupled, steps described as being performed by the port controller 718 can be performed by the system controller and vice versa. These controllers may transmit/receive data or signals enabling either one to perform the described processing or determining steps.

While optional features of a particular form of port 700 have been described above for ease of illustration, it will be appreciated that this is given by way of non-limiting example and that the port 700 can be provided in various different forms, as would be understood by the skilled person.

### Methods

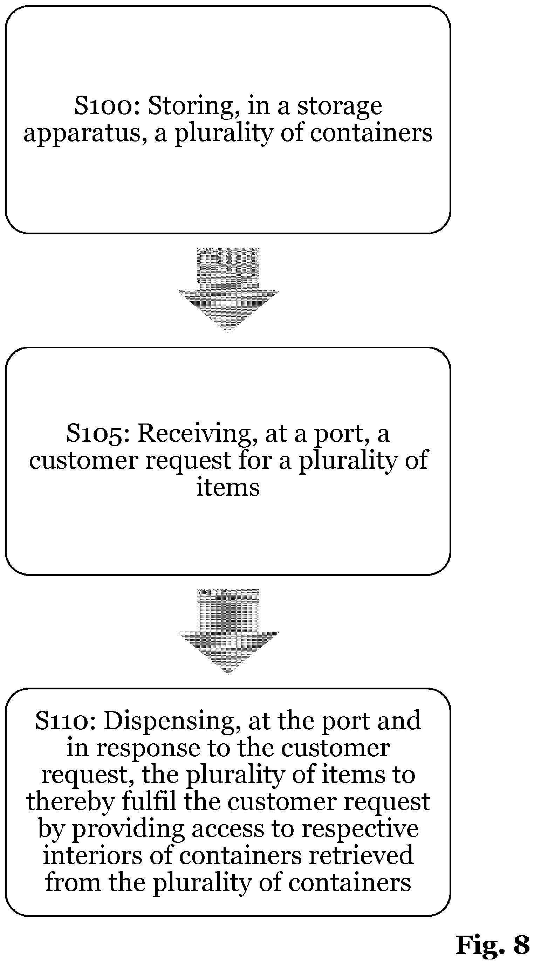

Referring to the embodiment shown in Fig. 8, a method for operating a storage and dispensing system is depicted. The storage and dispensing system comprises a storage apparatus and a port located remote from the storage apparatus. The storage and dispensing system may comprise the storage and dispensing system 500 described above. The storage apparatus may comprise the storage apparatus 502 described above. The port may comprise the port 510, 700 described above. The features and techniques described with respect to the systems and apparatuses and devices of the present disclosure are applicable and combinable with the method and vice versa.

In a step S100, the method comprises storing, in the storage apparatus 502, a plurality of containers. For example, the containers may be stored in the storage grid 100 arranged in stacks. The storage apparatus may include the first storage apparatus 504 for storing chilled containers and the second storage apparatus 506 for storing ambient temperature containers.

In a step S105, the method comprises receiving, at a port 510, 700, a customer request for a plurality of items. For example, the sensor 714 of the port 700 may detect an input corresponding to the customer request and the port controller 718 of the port may generate an instruction specifying the containers based on the input.

In a step S110, the method comprises dispensing, at the port 510, 700 and in response to the customer request, the plurality of items to thereby fulfil the customer request by providing access to respective interiors of containers retrieved from the plurality of containers. The containers may include at least one of the chilled containers and at least one of the ambient temperature containers. The containers may be moved to the port 510, 700 by a delivery robot 512, 600. The containers maybe stored in a buffer area 508 for providing to the port 510, i.e. prior to them being transported to the port 510, 700. The first conveyor 710 of the port 510, 700 may transport the containers to the opening 704 of the port 510, 700 configured to enable customer retrieval of the plurality of items therethrough from the containers. The second conveyor 712 of the port 510, 700 may transport emptied containers away from the opening 704. A shutter of the port 510, 700 may be moved between a first position obstructing the opening 704 and a second position exposing the opening 704. The system controller 514 may determine a change to the customer request and generate an instruction for changing at least one item included in the plurality of items in response to the determination.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The disclosure comprises the following items:
1. A port comprising:
   a sensor configured to detect an input corresponding to a customer request;
   a port controller configured to generate an instruction specifying containers based on the input;
   an opening configured to enable customer retrieval of a plurality of items therethrough the from containers; and
   at least one conveyor configured to transport the containers to the opening and away from the opening.
2. A port according to item 1, located remote from a storage apparatus configured to store a plurality of containers including the containers.
3. A port according to any item 1 or item 2, wherein the port is configured to dispense the plurality of items to thereby fulfil the customer request by providing access to respective interiors of the containers.
4. A port according to any preceding item, wherein the at least one conveyor comprises a first conveyor configured to transport the containers to the opening and a second conveyor configured to transport emptied containers away from the opening.
5. A port according to any preceding item, comprising a housing separating an interior of the port from an exterior of the port.
6. A port according to any preceding item comprising a shutter configured to move between a first position obstructing the opening and a second position exposing the opening.
7. A port according to item 6, wherein the shutter is configured to move to the second position in response to a determination by the port controller that the input corresponds to a valid customer request.
8. A port according to item 6 or item 7, wherein the shutter is configured to move to the second position in response to a determination by the port controller that the at least one conveyor is not currently moving.
9. A port according to any preceding item, comprising a carousel mechanism, the carousel mechanism comprising a plurality of platforms each configured to support a respective one of the containers and a chassis connecting the platforms, the carousel mechanism being configured to rotate so as to rotate the containers supported on the platforms.
10. A port according to any preceding item, wherein the input comprises a QR code, a bar code, an alphabetic code, a numeric code or an alphanumeric code.
11. A port according to any preceding item, comprising an input mechanism, and optionally wherein the input mechanism comprises a keyboard or a touchscreen.
12. A port according to any preceding item, comprising a display screen configured to display a status of the customer request.
13. A port according to any preceding item, wherein the at least one conveyor is configured to support at least five of the containers simultaneously, and optionally wherein the at least one conveyor is configured to support at least ten of the containers simultaneously, and optionally wherein the at least one conveyor is configured to support at least twenty of the containers simultaneously.
14. A port according to any preceding item, wherein the port controller is communicatively coupled to one or more delivery robots configured to move the containers to the port.
15. A port according to any preceding item, wherein the port controller is communicatively coupled to a system controller of a storage and dispensing system comprising the port and comprising a storage apparatus configured to store a plurality of containers including the containers.

## Claims

1. A storage and dispensing system comprising:
a storage apparatus configured to store a plurality of containers; and
a port located remote from the storage apparatus, the port being configured to:
receive a customer request for a plurality of items; and
dispense, in response to the customer request, the plurality of items to thereby fulfil the customer request by providing access to respective interiors of containers retrieved from the plurality of containers.

2. A storage and dispensing system according to claim 1, wherein the storage system comprises a storage grid configured to store the plurality of containers arranged in stacks.

3. A storage and dispensing system according to claim 1 or claim 2, wherein the storage apparatus comprises a first storage apparatus for storing chilled containers and a second storage apparatus for storing ambient temperature containers, the containers comprising at least one of the chilled containers and at least one of the ambient temperature containers.

4. A storage and dispensing system according to any preceding claim, comprising a delivery robot configured to move the containers to the port.

5. A storage and dispensing system according to any preceding claim, comprising a buffer area configured to store the containers retrieved from the plurality of containers for providing to the port.

6. A storage and dispensing system according to any preceding claim, wherein the port comprises:
an opening configured to enable customer retrieval of the plurality of items therethrough from the containers;
a first conveyor configured to transport the containers to the opening; and
a second conveyor configured to transport emptied containers away from the opening.

7. A storage and dispensing system according to claim 6, wherein the port comprises a shutter configured to move between a first position obstructing the opening and a second position exposing the opening.

8. A storage and dispensing system according to any preceding claim, wherein the port comprises:
a sensor configured to detect an input corresponding to the customer request; and
a port controller configured to generate an instruction specifying the containers based on the input.

9. A storage and dispensing system according to any preceding claim, comprising a system controller configured to determine a change to the customer request and to generate an instruction for changing at least one item included in the plurality of items in response to the determination.

10. A method for operating a storage and dispensing system comprising a storage apparatus and a port located remote from the storage apparatus, the method comprising:
storing, in the storage apparatus, a plurality of containers;
receiving, at the port, a customer request for a plurality of items; and
dispensing, at the port and in response to the customer request, the plurality of items to thereby fulfil the customer request by providing access to respective interiors of containers retrieved from the plurality of containers.

11. A method according to claim 10, comprising storing the plurality of containers arranged in stacks in a storage grid.

12. A method according to claim 10 or claim 11, wherein the storage apparatus comprises a first storage apparatus for storing chilled containers and a second storage apparatus for storing ambient temperature containers, the containers comprising at least one of the chilled containers and at least one of the ambient temperature containers.

13. A method according to any of claims 10-12, comprising moving, using a delivery robot, the containers to the port, and/or comprising storing the containers retrieved from the plurality of containers in a buffer area for providing to the port.

14. A method according to any of claims 10-13, comprising:
transporting, by a first conveyor of the port, the containers to an opening of the port configured to enable customer retrieval of the plurality of items therethrough from the containers; and
transporting, by a second conveyor of the port, emptied containers away from the opening,
and optionally comprising moving a shutter of the port between a first position obstructing the opening and a second position exposing the opening.

15. A method according to any of claims 10-14, comprising:
detecting, by a sensor of the port, an input corresponding to the customer request and generating, by a port controller of the port, an instruction specifying the containers based on the input; and/or
determining, by a system controller of the storage and dispensing system, a change to the customer request and generating, by the system controller, an instruction for changing at least one item included in the plurality of items in response to the determination.
